# EUROPÄISCHE PATENTSCHRIFT

(11) **EP 4 534 321 B1**
(45) Veröffentlichungstag und Bekanntmachung des Hinweises auf die Patenterteilung: **02.12.2026**
(21) Anmeldenummer: 23202080.0
(22) Anmeldetag: 06.10.2023
(51) Int. Cl.: B60L 1/00, B60L 3/00, B60L 50/10, B60L 53/14, B60L 53/62, B60L 58/15, B60L 1/04, E01C 19/48

(54) **STRASSENBAUMASCHINE MIT ELEKTRISCHEM ANTRIEB**
ROAD CONSTRUCTION MACHINE WITH ELECTRIC DRIVE
ENGIN DE CONSTRUCTION ROUTIÈRE À PROPULSION ÉLECTRIQUE

(43) Veröffentlichungstag der Anmeldung: 09.04.2025
(73) Patentinhaber: Joseph Vögele AG, 67067 Ludwigshafen (DE)
(72) Erfinder: Kost, Steffen, 67098 Bad Dürkheim (DE); Eul, Achim, 68305 Mannheim (DE); Erdtmann, Bernhard, 68535 Edingen Neckarhausen (DE); Pontius, Johannes, 66839 Schmelz (DE)
(74) Vertreter: Grünecker Patent- und Rechtsanwälte PartG mbB

(56) Entgegenhaltungen:
- JP-A- 2018 042 367
- JP-A- 2022 129 045
- US-A1- 2014 117 934
- US-A1- 2022 289 058
- US-A1- 2023 112 291
- US-A1- 2023 117 372
- US-A1- 2023 155 423

## Beschreibung

Die vorliegende Erfindung betrifft eine Straßenbaumaschine mit einem elektrischen Antrieb gemäß Anspruch 1 sowie ein Verfahren zum Überwachen und/oder Steuern einer Straßenbaumaschine gemäß Anspruch 13.

### Stand der Technik

Straßenbaumaschinen sind aus dem Stand der Technik hinreichend bekannt. Diese umfassen unter anderem Straßenfertiger, die Baumaterial auf eine zu fertigende Straße ausbringen und beispielsweise mit Hilfe einer Einbaubohle zum Straßenbelag ausfertigen. Auch Beschicker sind bekannt, die einen Gutbunker eines Straßenfertigers mit Baumaterial beschicken können. Ebenso sind andere Maschinen beziehungsweise Fahrzeuge, wie beispielsweise Planierraupen, bekannt, die zum Erstellen der Straße verwendet werden können.

Üblicherweise umfassen die Straßenbaumaschinen Verbrennungsmotoren, um die für ihre Arbeit und Fortbewegung notwendige Leistung aufzubringen. Alternativ sind jedoch auch Ausführungen bekannt, in denen ein elektrischer Antrieb entweder zusätzlich zum Verbrennungsmotor oder als einzige Energiequelle der Straßenbaumaschine zum Einsatz kommen können.

Straßenbaumaschinen mit zumindest teilweise elektrischem Antrieb benötigen jedoch elektrische Energie, die in einem Akkumulator der Straßenbaumaschine gespeichert werden kann, um ihre Arbeit zu verrichten. Diese Energie muss üblicherweise über längere Ladezyklen dem Akkumulator zugeführt werden, was den Einsatz einer solchen Straßenbaumaschine mit einem höheren Planungsaufwand hinsichtlich ihres Einsatzes verbindet, da die notwendigen Ladezyklen länger sind, als die für das Nachfüllen von fossilen Brennstoffen notwendige Zeit. US 2023/155423 A1, ebenfalls JP 2022 129045 A offenbart Straßenbaumaschine umfassend einen elektrischen Antrieb, einen Akkumulator zum Versorgen des elektrischen Antriebs mit elektrischem Strom, eine Ladevorrichtung zum Anschließen des Akkumulators an eine externe Stromquelle und zum Laden des Akkumulators und eine Anzeigeeinrichtung zum Anzeigen von für einen Ladezustand des Akkumulators und/oder von für einen Ladevorgang des Akkumulators indikativer Information.

### Aufgabe

Ausgehend vom bekannten Stand der Technik besteht die zu lösende technische Aufgabe somit darin, eine Straßenbaumaschine sowie ein Verfahren zum Überwachen und/oder Steuern einer Straßenbaumaschine anzugeben, mit denen der Einsatz der Straßenbaumaschine vereinfacht wird.

### Lösung

Diese Aufgabe wird durch die Straßenbaumaschine mit einem elektrischen Antrieb gemäß Anspruch 1 sowie das Verfahren zum Überwachen und/oder Steuern einer Straßenbaumaschine mit einem elektrischen Antrieb gemäß Anspruch 12 gelöst. Vorteilhafte Weiterbildungen der Erfindung sind in den Unteransprüchen erfasst.

Erfindungsgemäß wird eine Straßenbaumaschine angegeben, die Straßenbaumaschine umfassend einen elektrischen Antrieb, einen Akkumulator zum Versorgen des elektrischen Antriebs mit elektrischem Strom, eine Ladevorrichtung zum Anschließen des Akkumulators an eine externe Stromquelle und zum Laden des Akkumulators und eine Anzeigeeinrichtung zum Anzeigen von für einen Ladezustand des Akkumulators und/oder von für einen Ladevorgang des Akkumulators indikativer Information.

Die für den Ladezustand des Akkumulators indikative Information kann bevorzugt eine Angabe über den Energieinhalt des Akkumulators umfassen. Die für den Ladevorgang des Akkumulators indikative Information kann insbesondere Informationen umfassen, die für das korrekte Funktionieren des Ladens des Akkumulators indikativ sind und/oder weitere Informationen zum Ladevorgang, wie beispielsweise bestimmte von einem Bediener der Straßenbaumaschine vorgegebene Bedingungen für den Ladevorgang angeben. Die Erfindung ist diesbezüglich jedoch nicht beschränkt. Bevorzugt ist es, wenn die indikative Information auf der Anzeigeeinrichtung insbesondere Information ist, die nicht lediglich eine binäre Information enthält beziehungsweise wiedergibt (Ladevorgang läuft oder läuft nicht), sondern technische Daten über den Ladezustand und/oder Ladevorgang enthält, die bevorzugt in einem alphanumerischen Format wiedergegeben werden.

Insbesondere können Informationen, die in Form von Parameterwerten indikativ für den Ladevorgang und/oder den Ladezustand sind, als Absolutwerte und/oder als relative Werte bezogen auf eine vorgegebene Bezugsgröße ausgegeben werden. So kann beispielsweise der Ladezustand und insbesondere der Energieinhalt des Akkumulators während des Ladens als Absolutwert in Form von beispielsweise kWh oder kJ oder bezogen auf die maximale Ladung bzw. den Energieinhalt des Akkumulators in Prozent ausgegeben werden. Auch eine kombinierte Anzeige von absoluten Werten und relativen Werten ist möglich.

Mit dieser Straßenbaumaschine wird einem Bediener auf einfache Weise der gegenwärtige Zustand des Akkumulators und/oder Ladevorgangs angezeigt, sodass dieser den Betrieb der Straßenbaumaschine besser planen beziehungsweise voraussehen kann. Dies erleichtert den Betrieb der Straßenbaumaschine.

Es ist vorgesehen, dass die Anzeigeeinrichtung in einem Abstand von höchstens 1m oder höchstens 0,5m von einem Anschluss der Ladevorrichtung zum Anschließen des Akkumulators an eine externe Stromquelle an der Straßenbaumaschine angeordnet ist.

Die Anzeigeeinrichtung ist hier insbesondere so angeordnet, dass sie für den Bediener bevorzugt zu jeder Zeit zugänglich beziehungsweise sichtbar ist. Hierdurch kann der Bediener, während er die Ladevorrichtung bedient, die für den Ladevorgang und/oder Ladezustand indikativen Informationen erkennen. Dies erleichtert dem Bediener beispielsweise die Bedienung des Ladevorgangs durch Anschließen oder Entfernen eines entsprechenden Steckers zum Starten oder Beenden des Ladevorgangs und reduziert die Wege des Bedieners.

In einer Ausführungsform umfasst die für den Ladezustand des Akkumulators indikative Information wenigstens eines von einem absoluten und/oder relativen Füllstand des Akkumulators, einem Ist-Energieinhalt in Relation zu einem Soll-Maximal-Energieinhalt des Akkumulators. Der Bediener kann mit dieser Darstellung auf einfache Weise den Ladezustand des Akkumulators erkennen und daraus beispielsweise bestimmen, ob die Straßenbaumaschine ohne Vollenden des Ladevorgangs (beziehungsweise Laden des Akkumulators auf 100%) für die vorgesehene Arbeit verwendet werden kann. Dies kann den Einsatz der Straßenbaumaschine verbessern.

Die für den Ladevorgang des Akkumulators indikative Information kann wenigstens eines von einer Information über ein Starten des Ladevorgangs, ein vollständiges Beenden des Ladevorgangs, einen Fehler während des Ladevorgangs umfassen. Hiermit kann der Bediener feststellen, ob der Ladevorgang wie geplant abläuft.

Es kann vorgesehen sein, dass die Anzeigeeinrichtung ausgebildet ist, die für den Ladevorgang des Akkumulators indikative Information in einem alphanumerischen Format auszugeben. Das alphanumerische Format kann Buchstaben und/oder Zahlen sowie Sonderzeichen umfassen und optional zusätzlich eine piktografische Darstellung umfassen, die die alphanumerische Information piktografisch darstellt. Dies kann das Verständnis des Bedieners erleichtern.

Die für den Ladevorgang des Akkumulators indikative Information kann wenigstens eines von einer Ladeeffizienz, einer Batterietemperatur, einer voraussichtlichen Ladedauer, einem Batterie-Status, einem Anschlussstatus, einem Ladestrom umfassen. Hiermit kann der Einsatz der Straßenbaumaschine besser geplant werden.

Es kann vorgesehen sein, dass die Straßenbaumaschine eine Eingabeeinrichtung zum Interagieren eines Bedieners mit der Anzeigeeinrichtung und/oder zum Einstellen einer Funktion der Straßenbaumaschine umfasst.

Die Eingabeeinrichtung kann beispielsweise in Form einer Tastatur ausgestaltet sein oder eine solche umfassen. Die Anzeigeeinrichtung kann alternativ oder zusätzlich als Touchpad ausgeführt sein, sodass die Anzeigeeinrichtung und die Eingabeeinrichtung in einer Vorrichtung integriert sind.

Die Funktion der Straßenbaumaschine kann jede Funktion der Straßenbaumaschine sein. Insbesondere zählen hierzu Funktionen, die für das Erstellen oder Bearbeiten von Straßenbelag genutzt werden können, aber auch andere Funktionen, wie beispielsweise eine Beleuchtung oder einer Heizung eines Führerstands der Straßenbaumaschine werden unter dem Begriff der Straßenbaumaschine verstanden. Auch den Ladevorgang betreffende Funktionen sind hiervon umfasst. Mit der Eingabeeinrichtung wird dem Bediener eine Möglichkeit zur Einwirkung auf den betrieb der Straßenbaumaschine auch unter Berücksichtigung des Ladevorgangs gegeben.

Die Funktion kann eine Zeitsteuerung des Ladevorgangs und/oder ein Lademodus und/oder einen Ziel-Ladezustand des Akkumulators umfassen. Eine Zeitsteuerung des Ladevorgangs ist insbesondere so zu verstehen, dass eine Startzeit und/oder eine Endzeit für den Ladevorgang definiert werden kann, die beispielsweise unabhängig von dem dann erreichten Ladezustands des Akkumulators ist und ein Beginn und/oder Ende des Ladevorgangs bestimmt, sodass dieser ohne weitere Interaktion mit dem Bediener nach Anschluss an die externe Stromquelle gestartet und/oder beendet werden kann. Dies vereinfacht die Bedienung der Straßenbaumaschine.. Der Lademodus kann beispielsweise ein Schnellladen des Akkumulators mit erhöhter Energieaufnahme oder ein Normalladen mit verglichen dazu geringerer Energieaufnahme und damit höherer Ladezeit aber bevorzugt schonenderem Laden des Akkumulators beziehungsweise der Batteriezellen umfassen. Als Zielladezustand kann ein gewünschter Energieinhalt (als Absolutwert oder relativer Wert in Relation zu einem maximalen Energieinhalt) vorgesehen sein. Der Ladevorgang kann dann bei Erreichen des Zielladezustands oder des Erreichen des Zielladezustands mit einer gewissen Toleranz (beispielsweise 1% oder 2% oder 5% Abweichung) automatisch beendet werden. Hiermit kann das Laden des Akkumulators beispielsweise abhängig von dem gewünschten Einsatz der Straßenbaumaschine einfach vom Bediener eingestellt werden, was einen flexibleren Einsatz der Straßenbaumaschine bewirkt.

Es kann vorgesehen sein, dass die Funktion einen Betriebsmodus wenigstens einer Arbeitskomponente der Straßenbaumaschine während des Ladevorgangs umfasst. Bei der Arbeitskomponente kann es sich beispielsweise um eine Einbaubohle eines Straßenfertigers handeln. Der Betriebsmodus während des Ladevorgangs kann beispielsweise ein Vorwärmen oder Aufheizen der Einbaubohle auf eine gewünschte Betriebstemperatur umfassen, sodass mit Ende des Ladevorgangs der Straßenfertiger unmittelbar einsatzbereit ist. Aber auch jede andere Arbeitskomponente einer Straßenbaumaschine ist hier denkbar. Mit dieser Ausführungsform wird die Straßenbaumaschine effizienter einsetzbar.

Die Straßenbaumaschine kann weiterhin eine Steuereinheit zum Steuern der Arbeitskomponente abhängig von dem eingestellten Betriebsmodus umfassen. Die Steuereinheit kann als Computer mit zugeordnetem Prozessor und Speicher ausgeführt sein und beispielsweise Programminstruktionen umfassen, die abhängig von den von einem Bediener eingestellten Betriebsmodus ein Steuern der Arbeitskomponente ermöglichen. Hierzu können beispielsweise jedem Betriebsmodus Betriebsparameter der Arbeitskomponente zugeordnet sein, die von der Steuereinheit zum Steuern der Arbeitskomponente abhängig von dem gewählten Betriebsmodus verwendet werden. Hiermit wird die Anzahl an Eingriffen eines Bedieners zum Steuern der Straßenbaumaschine reduziert, was einen einfacheren Einsatz ermöglicht.

Die Straßenbaumaschine kann als ein Straßenfertiger oder ein Beschickerfahrzeug oder ein kombinierter Straßenfertiger-Beschicker-Bauzug ausgebildet sein. Diese Fahrzeuge können besonders bevorzugt mit einem elektrischen Antrieb (beispielsweise als Zusatz zu einem Verbrennungsmotor realisiert als Hybridfahrzeug) oder einem rein elektrischen Antrieb ausgestattet werden, sodass die Erfindung jeweils besonders vorteilhaft anwendbar ist.

Die Straßenbaumaschine kann einen Verbrennungsmotor umfassen. In diesem Sinne kann die Straßenbaumaschine mit einem "Hybridantrieb" ausgeführt sein. Der Einsatz der Straßenbaumaschine ist somit flexibler möglich.

Erfindungsgemäß ist ein Verfahren zum Überwachen und/oder Steuern einer Straßenbaumaschine vorgesehen, wobei die Straßenbaumaschine einen elektrischen Antrieb, einen Akkumulator zum Versorgen des elektrischen Antriebs mit elektrischem Strom, eine Ladevorrichtung zum Anschließen des Akkumulators an eine externe Stromquelle und zum Laden des Akkumulators umfasst und wobei die Straßenbaumaschine weiterhin eine Anzeigeeinrichtung zum Anzeigen von für einen Ladezustand des Akkumulators und/oder von für einen Ladevorgang des Akkumulators indikativer Information umfasst, das Verfahren umfassend ein Anzeigen der indikativen Informationen auf der Anzeigeeinrichtung. Dieses Verfahren erlaubt ein für den Bediener verbessertes Überwachen und Steuern der Straßenbaumaschine auch bei längeren Ladezyklen des Akkumulators, was die Einsetzbarkeit der Straßenbaumaschine verbessert.

Im Rahmen des Verfahrens kann die Straßenbaumaschine eine Straßenbaumaschine nach einer der vorangegangenen Ausführungsformen sein. Die oben beschriebenen Vorteile der Straßenbaumaschine können mit dieser Ausführungsform im Betrieb realisiert werden.

Das Verfahren kann ein Steuern einer Arbeitskomponente der Straßenbaumaschine abhängig von einem über eine Eingabeeinrichtung eingestellten Betriebsmodus der Arbeitskomponente während des Ladevorgangs umfassen. Hiermit kann sichergestellt werden, dass die Straßenbaumaschine mit Beenden des Ladevorgangs einsetzbar ist.

Sämtliche beschriebenen Ausführungsformen sind als miteinander beliebig kombinierbar offenbart. Nachfolgend beruhen "Ausführungsformen" auf Ausführungsformen der vorliegenden Offenbarung.

### Kurze Beschreibung der Figuren

- Figur 1: zeigt eine schematische Ansicht einer Straßenbaumaschine gemäß einer Ausführungsform,
- Figur 2: zeigt eine schematische Ansicht einer Ladevorrichtung und einer Anzeigeeinrichtung gemäß einer Ausführungsform.

### Ausführliche Beschreibung

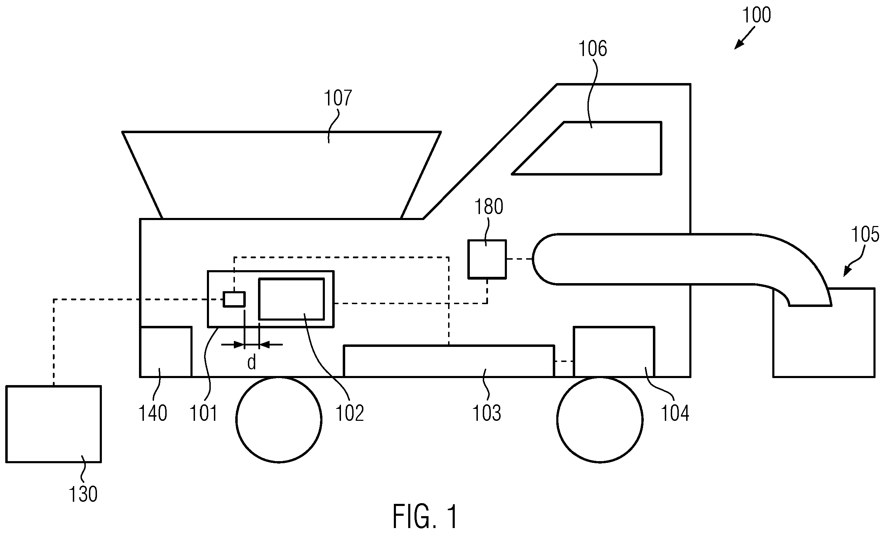

Figur 1 zeigt eine Straßenbaumaschine 100 gemäß einer Ausführungsform der vorliegenden Erfindung. Die Straßenbaumaschine ist hier als Straßenfertiger gezeigt, der eine Einbaubohle 105 zum Ausbringen von erwärmtem Baumaterial umfasst, das der Einbaubohle über den beispielhaft dargestellten Gutbunker 107 zugeführt werden kann. Die Ausführungsform der Straßenbaumaschine 100 als Straßenfertiger ist jedoch nicht zwingend. Die Straßenbaumaschine 100 kann auch als Beschicker oder jede andere im Rahmen des Straßenbaus eingesetzte, insbesondere fahrbare Maschine ausgeführt sein und beispielsweise auch oder alternativ eine Planierraupe umfassen oder als (kombinierter) Fahrzeugzug umfassend einen Straßenfertiger und einen Beschicker und/oder andere oder weitere Fahrzeuge bzw. Maschinen umfassend realisiert sein.

Die Straßenbaumaschine 100 kann, muss jedoch keinen Führerstand 106 umfassen, von dem aus ein Bediener den Betrieb der Straßenbaumaschine zumindest teilweise steuern und/oder überwachen kann.

Erfindungsgemäß umfasst die Straßenbaumaschine 100 einen elektrischen Antrieb 104 zum Betreiben zumindest einer Komponente der Straßenbaumaschine (wie beispielsweise der Einbaubohle 105) und/oder der ganzen Straßenbaumaschine (beispielsweise inklusive Antriebselementen zum Bewegen der Straßenbaumaschine, wie Räder oder Ketten) und einen Akkumulator 103 zum Versorgen des elektrischen Antriebs 104 mit elektrischem Strom. Weiterhin umfasst die Straßenbaumaschine 100 eine Ladevorrichtung 101 zum Anschließen des Akkumulators 103 an eine externe Stromquelle 130. Die externe Stromquelle ist erfindungsgemäß nicht beschränkt und kann beispielsweise einen Anschluss an ein städtisches oder allgemein verfügbares Stromnetz darstellen. Die Ladevorrichtung 101 kann mit dieser beispielsweise über ein geeignetes Kabel verbunden werden, um elektrische Energie in Form von Strom dem Akkumulator 103 zum Laden des Akkumulators zuzuführen.

Optional kann die Straßenbaumaschine zusätzlich zu dem elektrischen Antrieb 104 einen Verbrennungsmotor 140 umfassen, um die Straßenbaumaschine zumindest teilweise mit Energie zu versorgen. Der Verbrennungsmotor 140 kann auch als Backup vorgesehen sein und nur dann zum Einsatz kommen wenn der Füllstand des Akkumulators zu gering ist, um die Funktion der Straßenbaumaschine aufrechtzuerhalten.

Weiterhin ist erfindungsgemäß eine Anzeigeeinrichtung 102 als Teil der Straßenbaumaschine 100 vorgesehen, über die für den Ladezustand des Akkumulators 103 und/oder für den Ladevorgang des Akkumulators 103 indikative Informationen angezeigt werden können.

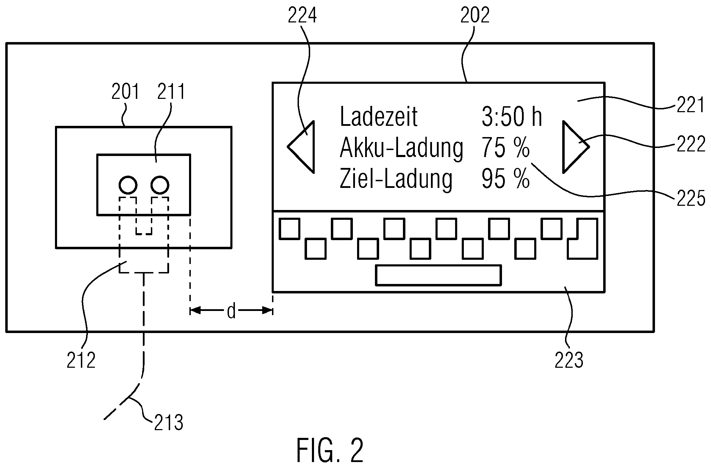

Die Anzeigeeinrichtung 102 kann grundsätzlich an einer beliebigen Position der Straßenbaumaschine 100 angeordnet sein, solange diese Position für einen Bediener zugänglich ist, sodass ein Bediener die auf der Anzeigeeinrichtung angezeigten Informationen wahrnehmen kann. Bevorzugt kann die Anzeigeeinrichtung 102 in einem Führerstand 106 (sofern vorgesehen) der Straßenbaumaschine 100 angeordnet sein oder in einem Bereich in der Nähe der Ladevorrichtung 101 beziehungsweise eines Anschlusses (siehe Figur 2) der Ladevorrichtung vorgesehen sein. Der Bereich ist so gewählt, dass ein Abstand d der Anzeigeeinrichtung zu der Ladevorrichtung oder dem Anschluss der Ladevorrichtung höchstens 1m oder höchstens 0,5m, besonders bevorzugt höchstens 0,25m beträgt. Die Anzeigeeinrichtung ist so in unmittelbarer Nähe der Ladevorrichtung angeordnet, was das Bedienen der Ladevorrichtung durch einen Bediener beispielsweise auch basierend auf den angezeigten indikativen Informationen vereinfachen kann.

Der Abstand d (siehe Figur 1) muss sich nicht, wie hier dargestellt, in einer horizontalen Richtung erstrecken, sondern kann auch vertikal oder zumindest teilweise vertikal verlaufen, sodass die Anzeigeeinrichtung auch oberhalb oder unterhalb des Anschlusses beziehungsweise der Ladevorrichtung oder schräg versetzt dazu angeordnet sein kann.

Bevorzugt werden die Anzeigeeinrichtung und/oder die Ladevorrichtung so angeordnet, dass ein ergonomischer Zugang für einen Bediener möglich ist, insbesondere ohne ein Bücken oder in die Hocke Gehen des Bedieners möglich ist. So ist der Anschluss und/oder die Ladevorrichtung bei Stand der Straßenbaumaschine auf dem Boden in einer vom Boden aus gemessenen Höhe von zwischen 1m und 1,5m angeordnet sein und/oder die Anzeigevorrichtung in einer Höhe gemessen vom Boden aus von 1,3m bis 1,9m angeordnet sein.

Die Straßenbaumaschine 100 kann weiterhin eine Steuereinheit 180 umfassen, die mit der Ladevorrichtung 101 und/oder der Anzeigeeinrichtung 102 verbunden sein kann, und beispielsweise basierend auf einer Eingabe an der Anzeigeeinrichtung 102 oder einer zugeordneten Eingabeeinrichtung eine Arbeitskomponente 105 (beispielsweise die Einbaubohle) steuern kann.

Die auf der Anzeigeeinrichtung angezeigten Informationen, die indikativ für den Ladezustand des Akkumulators und/oder den Ladevorgang sind, können bevorzugt in einem alphanumerischen Format angezeigt werden, das Buchstaben und/oder Ziffern und/oder weitere Sonderzeichen umfassen kann. So können Parameter, die den Ladevorgang und/oder den Ladezustand definieren oder für diesen charakteristisch sind, in Form von Absolutwerten oder relativen Werten bezogen auf eine Vergleichsgröße angegeben werden.

Beispielsweise kann auf der Anzeigeeinrichtung als indikativ für den Ladezustand der Energieinhalt des Akkumulators angezeigt werden. Dieser kann beispielsweise als "Ist-Energieinhalt" in kWh oder in kJ angegeben werden (absoluter Wert) und/oder als relativer Wert (beispielsweise in Prozent oder einem Wert zwischen 0 und 1) in Relation zu einem Soll-Maximal-Energieinhalt des Akkumulators angezeigt werden. Der Soll-Maximal-Energieinhalt des Akkumulators kann dabei entweder der maximale Energieinhalt des Akkumulators oder ein gewünschter Soll-Maximal-Energieinhalt des Akkumulators sein, der beispielsweise am Ende des Ladevorgangs erreicht werden soll.

Auch eine Temperatur des Akkumulators während des Ladevorgangs kann als für den Ladevorgang indikative Information angezeigt werden und beispielsweise in Grad Celsius ausgegeben werden. Es kann dazu ein hier nicht dargestellter Sensor vorgesehen sein, der die Temperatur des Akkumulators oder eines Teils davon messen und diese Information an die Steuereinheit übergeben kann. Diese kann die gemessene Temperatur dann optional weiterverarbeiten und ggf. zusammen mit weiteren Informationen auf der Anzeigeeinrichtung zur Ausgabe/Anzeige bringen. Hiermit ist es dem Bediener möglich, festzustellen, ob der Ladevorgang zuverlässig abläuft. Zusätzlich zu der Temperatur des Akkumulators kann eine piktografische Darstellung beispielsweise in Form eines farblichen Symbols angezeigt werden, das indikativ dafür ist, ob die Temperatur des Akkumulators während des Ladevorgangs in einem zulässigen Bereich liegt. Dieser zulässige Bereich kann beispielsweise definiert sein durch eine Minimal- und/oder Maximaltemperatur des Akkumulators während eines Ladevorgangs und kann durch die Konstruktion des Akkumulators bedingt sein.

Weitere Informationen, die indikativ für den Ladevorgang des Akkumulators sind, können beispielsweise ein Starten oder Beenden des Ladevorgangs sowie einen Fehler des Ladevorgangs umfassen. Bei einem Fehler des Ladevorgangs kann beispielsweise ein nicht korrektes Einstecken eines Steckers (siehe Figur 2) angezeigt werden, und der Bediener kann optional durch eine entsprechende Ausgabe an der Anzeigeeinrichtung angewiesen werden, die Position des Steckers zu prüfen.

Weiterhin können detaillierte Meldungen über eventuell auftretende Fehler während des Ladevorgangs (beispielsweise ein Überschreiten der zulässigen Akkumulatortemperatur oder ein Fehler bei der Zufuhr der Energie an den Akkumulator) ausgegeben werden.

Zusätzlich oder alternativ können für den Ladevorgang indikative Informationen angezeigt werden, die beispielsweise eine Ladeeffizienz (in Prozent relativ zu einer maximalen, beispielsweise konstruktionsbedingt höchstens erreichbaren Ladeeffizienz, oder als Absolutwert in Form eines Wirkungsgrades) angeben. Zusätzlich oder alternativ kann auch ein tatsächlicher Ladestrom, der von der Ladeeinrichtung an den Akkumulator überführt wird und/oder der von der externen Stromquelle 130 an die Ladevorrichtung übergeben wird, angezeigt werden. Um diesen Ladestrom zu bestimmen, kann beispielsweise in der Straßenbaumaschine in Verbindung mit der Ladevorrichtung 101 und/oder dem Akkumulator 103 ein Voltmeter und/oder Amperemeter vorgesehen sein, das die am Akkumulator und/oder an der Ladevorrichtung anliegende Spannung beziehungsweise den in den Akkumulator beziehungsweise an die Ladevorrichtung übertragenen Strom messen kann. Die Informationen des Amperemeters oder Voltmeters können dann beispielsweise an die Steuereinheit 180 übergeben werden, die diese Informationen gegebenenfalls weiterverarbeitet und an die Anzeigeeinrichtung zum Anzeigen übergeben kann.

Weiterhin (zusätzlich oder alternativ) können die auf der Anzeigeeinrichtung 102 angezeigten, für den Ladevorgang indikativen Informationen auch eine voraussichtliche Ladedauer beispielsweise bis zum Erreichen des maximalen Ladestands (Energieinhalt) des Akkumulators und/oder bis zum Erreichen eines gewünschten Ladestands des Akkumulators umfassen. Zusätzlich oder alternativ kann beispielsweise auch eine Information darüber ausgegeben werden, wie lang der Ladevorgang bereits dauert oder welcher Lademodus verwendet wird. So kann der Akkumulator mit unterschiedlichen Lademodi, beispielsweise einem Schnelllademodus, bei dem eine vergleichsweise große Energiemenge in einer gegebenen Zeiteinheit in den Akkumulator überführt wird, und einem Normallademodus, bei dem eine verglichen damit geringere Energiemenge in derselben Zeiteinheit in den Akkumulator überführt wird und gleichzeitig das Laden den Akkumulator physisch weniger belastet, angezeigt werden.

Auch der gewählte Lademodus kann beispielsweise nicht nur in Form eines alphanumerischen Formats, sondern zusätzlich in Form einer piktografischen Darstellung auf der Anzeigeeinrichtung angezeigt werden, um dem Bediener das Erkennen des gewählten Lademodus zu vereinfachen. Es kann auch vorgesehen sein, dass eine piktografische Darstellung des Lademodus selbst zusammen mit weiteren in einem alphanumerischen Format angezeigten, für den Lademodus indikativen Informationen (beispielsweise zugeführte Energiemenge pro Zeiteinheit) angezeigt wird. Der Bediener ist damit darüber informiert, unter welchen Bedingungen das Laden des Akkumulators erfolgt. Zusätzlich oder alternativ kann auch eine Information darüber ausgegeben werden, wann bei Verwendung des betreffenden Lademodus der gewünschte Energieinhalt und/oder der maximale Energieinhalt des Akkumulators erreicht werden wird.

Figur 2 zeigt eine weitere Ausführungsform der Ladevorrichtung 201 und der Anzeigeeinrichtung 202. Lediglich beispielhaft ist in der hier gezeigten Ausführungsform die Ladevorrichtung 201 als einen Anschluss 211 umfassend gezeigt. Diese Ausführungsform kann auch mit jeder der in Zusammenhang mit Figur 1 beschriebenen Ausführungsformen realisiert werden. Der Anschluss 201 kann so ausgeführt sein, dass er über einen Stecker 212 und mit einem geeigneten Kabel 213 mit der hier nicht dargestellten externen Stromquelle (beispielsweise der Stromquelle 130 aus Figur 1) lösbar verbunden werden kann. Zusätzlich kann hier eine Sicherungseinrichtung (nicht dargestellt) vorgesehen sein, die ein unbeabsichtigtes Herausfallen oder Lösen des Steckers aus dem Anschluss und damit ein Unterbrechen des Ladevorgangs verhindern kann. Diese Schutzeinrichtung kann mechanisch ausgeführt sein und beispielsweise eine oder mehrere Klemmen umfassen, die den Stecker fest mit dem Anschluss 211 verbinden und nur durch manuelle Betätigung gelöst werden können. Hiermit wird sichergestellt, dass der Ladevorgang zuverlässig abläuft.

In der Figur 2 ist ebenfalls die Anzeigeeinrichtung 202 in einem Bereich neben dem Anschluss 211 (in einem Abstand d, wie in Figur 1 beschrieben) gezeigt. Während hier die Anzeigeeinrichtung 202 rechts neben dem Anschluss 211 angeordnet ist, ist diese Ausführung, wie bereits beschrieben, nicht zwingend. Alternativ kann die Anzeigeeinrichtung 202 auch links neben dem Anschluss 211 oder oberhalb oder unterhalb des Anschlusses 211 oder schräg dazu versetzt angeordnet sein. Die Erfindung ist diesbezüglich nicht beschränkt und die im Zusammenhang mit der Figur 1 beschriebenen Ausführungsformen können auch hier realisiert werden.

Die Anzeigeeinrichtung 202 umfasst in der in Figur 2 dargestellten Ausführungsform einen Anzeigebereich 221, in dem die für den Ladevorgang und/oder Ladezustand indikativen Informationen 225 angezeigt werden. Dabei können einzelne Informationen oder auch Gruppen von Informationen, die indikativ für unterschiedliche Parameter oder Zustände während des Ladevorgangs und/oder den Ladezustand des Akkumulators sind, zusammen angezeigt werden. In der hier gezeigten Ausführungsform wird beispielsweise eine noch verbleibende Ladezeit angezeigt (hier beispielhaft als 3 Stunden und 50 Minuten). Diese verbleibende Ladezeit kann beispielsweise von der in Figur 1 bereits beschriebenen Steuereinheit basierend auf der zugeführten Energiemenge pro Zeiteinheit an den Akkumulator und einem Soll- oder Ziel-Maximal-Energieinhalt des Akkumulators am Ende des Ladevorgangs berechnet werden, wobei der Soll-Maximal-Energieinhalt entweder dem Maximal-Energieinhalt des Akkumulators oder einem gewünschten Energieinhalt des Akkumulators am Ende des Ladevorgangs entsprechen kann.

Weiterhin wird in dieser Ausführungsform der aktuelle Energieinhalt des Akkumulators (Akku-Ladung) als relativer Wert in Bezug auf die maximale Ladung des Akkumulators angegeben. Ebenfalls wird der Soll-Maximal-Energieinhalt (Ziel-Ladung) als relativer Wert bezogen auf den maximalen Energieinhalt des Akkumulators angegeben. Alternativ oder zusätzlich können hier auch absolute Werte angegeben werden, die den jeweiligen Energieinhalt beispielsweise in kWh oder kJ ausgeben. Diese Informationen sind nur beispielhaft zu verstehen und es können sämtliche der bisher beschriebenen und im folgenden beschriebenen Informationen stattdessen oder zusätzlich auf der Anzeigeeinrichtung angezeigt werden.

In der hier dargestellten Ausführungsform umfasst die Anzeigeeinrichtung 202 optional weiterhin eine Eingabeeinrichtung 223. Diese kann als zusätzliche Tastatur vorgesehen sein, die separat von dem Anzeigebereich 221 vorgesehen sein kann. Alternativ kann auch vorgesehen sein, dass die Anzeigeeinrichtung in Form eines interaktiven Touch-Displays ausgeführt ist, sodass die Eingabeeinrichtung 223 und der Anzeigebereich 221 integriert ausgeführt sind. Dies erlaubt ein gezieltes Anzeigen von Eingabeelementen zur Interaktion mit dem Bediener abhängig von den angezeigten Informationen.

Zusätzlich oder alternativ kann vorgesehen sein, dass durch entsprechende Schaltelemente 222 und 224 zwischen unterschiedlichen Anzeigen gewechselt werden kann. So kann eine erste Anzeige vorgesehen sein, die lediglich Informationen zum Ladezustand des Akkumulators ausgibt. Eine zweite Anzeige, die durch Betätigen der Schaltelemente 222 und/oder 224 aufgerufen werden kann, kann ausschließlich Informationen über den Ladevorgang umfassen. Auch das Anzeigen von Untergruppen von für den Ladezustand und/oder den Ladevorgang indikativen Informationen ist durch Betätigen der Schaltelemente 222 und/oder 224 möglich.

Über die Eingabeeinrichtung kann dem Bediener ebenfalls eine Möglichkeit gegeben werden, eine Funktion der Straßenbaumaschine und/oder eine Funktion des Ladevorgangs zu steuern. So kann über die Eingabeeinrichtung 223 beispielsweise ein Lademodus (Schnellladen oder Normalladen wie oben beschrieben) gewählt werden, um einen Ladevorgang durchzuführen. Alternativ oder zusätzlich kann vorgesehen sein, dass der Bediener über die Eingabeeinrichtung 223 beispielsweise einen Soll-Maximal-Energieinhalt bzw. Ziel-Energieinhalt am Ende des Ladevorgangs definiert und die Steuereinheit (siehe Figur 1) den Ladevorgang dann so steuert, dass er mit Erreichen des Ziel-Energieinhalts beendet wird. Alternativ oder zusätzlich kann auch eine Ladedauer zum Laden des Akkumulators durch den Bediener über die Eingabeeinrichtung 223 angegeben werden. Beispielsweise kann diese Ladedauer in Stunden und/oder Minuten vom Bediener festgelegt werden und ggf. unabhängig vom dann erreichten Ladzustand der Ladevorgang beendet werden.

Alternativ oder zusätzlich kann ebenfalls vorgesehen sein, dass über die Eingabeeinrichtung eine Funktion der Straßenbaumaschine eingestellt werden kann, die insbesondere einen Betriebsmodus einer Arbeitskomponente der Straßenbaumaschine während des Ladevorgangs umfasst. Am Beispiel einer Einbaubohle kann diese Funktion beispielsweise ein Vorwärmen der Einbaubohle auf eine gewünschte Betriebstemperatur am Ende des Ladevorgangs umfassen. Wird dieser Betriebsmodus der Arbeitskomponente durch einen Bediener eingegeben, kann die Steuereinheit während des Ladevorgangs die Arbeitskomponente über den Akkumulator mit Energie versorgen, um am Ende des Ladevorgangs den gewünschten Zustand der Arbeitskomponente sicherzustellen. Hiermit wir gewährleistet, dass die Arbeitskomponente den Betriebsmodus einnimmt, ohne dass hierzu Energie aus einem nicht mit der Stromquelle verbundenen Akkumulator entnommen werden muss, sodass am Ende des Ladevorgangs die Arbeitskomponente den gewünschten Betriebszustand beziehungsweise Betriebsmodus einnimmt und zusätzlich der Akkumulator beispielsweise den gewünschten Energieinhalt aufweist. Hiermit wird ein effizienter Betrieb der Straßenbaumaschine gewährleistet.

Sämtliche hier beschriebenen für den Ladevorgang und/oder den Ladezustand der Straßenbaumaschine indikativen Informationen können in beliebigen Kombinationen auf der Anzeigeeinrichtung angezeigt werden. Dies schließ nicht nur die gemeinsame Darstellung der Informationen auf der Anzeigeeinrichtung ein, sondern auch eine selektive Darstellung der betreffenden Informationen, zwischen denen entsprechend der in Zusammenhang mit Figur 2 beschriebenen Ausführungsformen gewechselt werden kann.

## Patentansprüche

1. Straßenbaumaschine (100) umfassend einen elektrischen Antrieb (104), einen Akkumulator (103) zum Versorgen des elektrischen Antriebs mit elektrischem Strom, eine Ladevorrichtung (101) zum Anschließen des Akkumulators an eine externe Stromquelle (130) und zum Laden des Akkumulators und eine Anzeigeeinrichtung (102) zum Anzeigen von für einen Ladezustand des Akkumulators und/oder von für einen Ladevorgang des Akkumulators indikativer Information, **dadurch gekennzeichnet, dass** die Anzeigeeinrichtung (102) in einem Abstand von höchstens 1m oder höchstens 0,5m von einem Anschluss der Ladevorrichtung (101) zum Anschließen des Akkumulators (103) an eine externe Stromquelle (130) an der Straßenbaumaschine (100) angeordnet ist, wobei der Anschluss und/oder die Ladevorrichtung bei Stand der Straßenbaumaschine auf dem Boden in einer vom Boden aus gemessenen Höhe von zwischen 1m und 1,5m angeordnet ist und die Anzeigeeinrichtung (102) in einer Höhe gemessen vom Boden aus von 1,3m bis 1,9m angeordnet ist.

2. Straßenbaumaschine (100) nach Anspruch 1, wobei die für den Ladezustand des Akkumulators (102) indikative Information wenigstens eines von einem absoluten und/oder relativen Füllstand des Akkumulators (103), einem Ist-Energieinhalt in Relation zu einem Soll-Maximal-Energieinhalt des Akkumulators umfasst.

3. Straßenbaumaschine (100) nach einem der Ansprüche 1 bis 2, wobei die für den Ladevorgang des Akkumulators (103) indikative Information wenigstens eines von einer Information über ein Starten des Ladevorgangs, ein vollständiges Beenden des Ladevorgangs, einen Fehler während des Ladevorgangs umfasst.

4. Straßenbaumaschine (100) nach Anspruch 3, wobei die Anzeigeeinrichtung (102) ausgebildet ist, die für den Ladevorgang des Akkumulators (103) indikative Information in einem alphanumerischen Format auszugeben.

5. Straßenbaumaschine (100) nach einem der Ansprüche 1 bis 4, wobei die für den Ladevorgang des Akkumulators (103) indikative Information wenigstens eines von einer Ladeffizienz, einer Batterietemperatur, einer voraussichtlichen Ladedauer, einem Batterie-Status, einem Anschlussstatus, einem Ladestrom umfasst.

6. Straßenbaumaschine (100) nach einem der Ansprüche 1 bis 5, wobei die Straßenbaumaschine (100) eine Eingabeeinrichtung (223) umfasst zum Interagieren eines Bedieners mit der Anzeigeeinrichtung (102) und/oder zum Einstellen einer Funktion der Straßenbaumaschine (100) umfasst.

7. Straßenbaumaschine (100) nach Anspruch 6, wobei die Funktion eine Zeitsteuerung des Ladevorgangs und/oder ein Lademodus und/oder einen Ziel-Ladezustand des Akkumulators umfasst.

8. Straßenbaumaschine (100) nach Anspruch 6 oder 7, wobei die Funktion einen Betriebsmodus wenigstens einer Arbeitskomponente (105) der Straßenbaumaschine (100) während des Ladevorgangs umfasst.

9. Straßenbaumaschine (100) nach Anspruch 8, weiterhin umfassend eine Steuereinheit (180) zum Steuern der Arbeitskomponente (105) abhängig von dem eingestellten Betriebsmodus umfasst.

10. Straßenbaumaschine (100) nach einem der Ansprüche 1 bis 9, wobei die Straßenbaumaschine ein Straßenfertiger oder ein Beschickerfahrzeug oder ein kombinierter Straßenfertiger-Beschicker-Bauzug ist.

11. Straßenbaumaschine (100) nach einem der Ansprüche 1 bis 10, wobei die Straßenbaumaschine (100) weiterhin einen Verbrennungsmotor (140) umfasst.

12. Verfahren zum Überwachen und/oder Steuern einer Straßenbaumaschine (100), wobei die Straßenbaumaschine (100) einen elektrischen Antrieb (104), einen Akkumulator (103) zum Versorgen des elektrischen Antriebs mit elektrischem Strom, eine Ladevorrichtung (101) zum Anschließen des Akkumulators an eine externe Stromquelle (130) und zum Laden des Akkumulators (103) umfasst und wobei die Straßenbaumaschine (100) weiterhin eine Anzeigeeinrichtung (102) zum Anzeigen von für einen Ladezustand des Akkumulators und/oder von für einen Ladevorgang des Akkumulators indikativer Information umfasst, das Verfahren umfassend ein Anzeigen der indikativen Informationen auf der Anzeigeeinrichtung (102), **dadurch gekennzeichnet, dass** die Anzeigeeinrichtung (102) in einem Abstand von höchstens 1m oder höchstens 0,5m von einem Anschluss der Ladevorrichtung (101) zum Anschließen des Akkumulators (103) an eine externe Stromquelle (130) an der Straßenbaumaschine (100) angeordnet ist, wobei der Anschluss und/oder die Ladevorrichtung bei Stand der Straßenbaumaschine auf dem Boden in einer vom Boden aus gemessenen Höhe von zwischen 1m und 1,5m angeordnet ist und die Anzeigevorrichtung in einer Höhe gemessen vom Boden aus von 1,3m bis 1,9m angeordnet ist.

13. Verfahren nach Anspruch 12, wobei die Straßenbaumaschine (100) eine Straßenbaumaschine nach einem der Ansprüche 1 bis 11 ist.

14. Verfahren nach Anspruch 12 oder 13, wobei das Verfahren ein Steuern einer Arbeitskomponente (105) der Straßenbaumaschine (100) abhängig von einem über eine Eingabeeinrichtung (223) eingestellten Betriebsmodus der Arbeitskomponente (105) während des Ladevorgangs umfasst.

## Claims

1. A road-making machine (100), comprising an electric drive (104), a rechargeable battery (103) for supplying the electric drive with electrical current, a charging device (101) for connecting the rechargeable battery to an external power source (130) and for charging the rechargeable battery, and a display device (102) for displaying information indicative of a state of charge of the rechargeable battery and/or of a charging process of the rechargeable battery, **characterized in that**
the display device (102) is arranged on the road construction machine (100) at a distance of at most 1m or at most 0.5m from a connection of the charging device (101) for connecting the rechargeable battery (103) to an external power source (130), wherein the connection and/or the charging device is arranged at a height measured from the ground of between 1m and 1.5m when the road construction machine is standing on the ground,
and the display device (102) is arranged at a height measured from the ground of 1.3m to 1.9m.

2. The road-making machine (100) according to claim 1, wherein the information indicative of the state of charge of the rechargeable battery (102) comprise at least one of an absolute and/or relative charge level of the rechargeable battery (103), and an actual energy content in relation to a target maximum energy content of the rechargeable battery.

3. The road-making machine (100) according to anyone of claims 1 to 2, wherein the information indicative of the charging process of the battery (103) comprises at least one of information about a start of the charging process, a complete termination of the charging process, and an error during the charging process.

4. The road-making machine (100) according to claim 3, wherein the display device (102) is configured to output the information indicative of the charging process of the rechargeable battery (103) in an alphanumeric format.

5. The road-making machine (100) according to anyone of claims 1 to 4, wherein the information indicative of the charging process of the rechargeable battery (103) comprises at least one of a charging efficiency, a battery temperature, an estimated charging time, a battery status, a connection status and a charging current.

6. The road-making machine (100) according to anyone of claims 1 to 5, wherein the road-making machine (100) comprises an input device (223) for interaction of an operator with the display device (102) and/or for setting a function of the road-making machine (100).

7. The road-making machine (100) according to claim 6, wherein the function comprises a timing of the charging process and/or a charging mode and/or a target state of charge of the rechargeable battery.

8. The road-making machine (100) according to claims 6 or 7, wherein the function comprises an operating mode of at least one working component (105) of the road-making machine (100) during the charging process.

9. The road-making machine (100) according to claim 8, further comprising a control unit (180) for controlling the working component (105) depending on the set operating mode.

10. The road-making machine (100) according to anyone of claims 1 to 9, wherein the road-making machine is a road paver or a feeder vehicle or a combined road paver-feeder construction train.

11. The road-making machine (100) according to anyone of claims 1 to 10, wherein the road-making machine (100) further comprises a combustion engine (140).

12. A method for monitoring and/or controlling a road-making machine (100), wherein the road-making machine (100) comprises an electric drive (104), a rechargeable battery (103) for supplying the electric drive with electrical current, a charging device (101) for connecting the rechargeable battery to an external power source (130) and for charging the rechargeable battery (103), and wherein the road-making machine (100) further comprises a display device (102) for displaying information indicative of a state of charge of the rechargeable battery and/or of a charging process of the rechargeable battery, wherein the method comprises displaying the indicative information on the display device (102) **characterized in that**
the display device (102) is arranged on the road construction machine (100) at a distance of at most 1m or at most 0.5m from a connection of the charging device (101) for connecting the rechargeable battery (103) to an external power source (130),wherein the connection and/or the charging device is arranged at a height measured from the ground of between 1m and 1.5m when the road construction machine is standing on the ground,
and the display device (102) is arranged at a height measured from the ground of 1.3m to 1.9m.

13. The method according to claim 12, wherein the road-making machine (100) is a road making machine according to anyone of claims 1 to 11.

14. The method according to claims 12 or 13, wherein the method comprises controlling a working component (105) of the road-making machine (100) depending on an operating mode of the working component (100) during the carding process set via an input device (223).

## Revendications

1. Engin de construction routière (100) comprenant un entraînement électrique (104), un accumulateur (103) permettant d'alimenter l'entraînement électrique en courant électrique, un dispositif de charge (101) permettant de connecter l'accumulateur à une source de courant externe (130) et permettant de charger l'accumulateur, et un dispositif d'affichage (102) permettant d'afficher des informations indicatives d'un état de charge de l'accumulateur et/ou d'un processus de charge de l'accumulateur,
**caractérisé en ce que**
le dispositif d'affichage (102) est agencé au niveau de l'engin de construction routière (100) à une distance maximale d'au plus 1 m ou d'au plus 0,5 m par rapport à un raccordement du dispositif de charge (101) permettant de connecter l'accumulateur (103) à une source d'alimentation externe (130), dans lequel le raccordement et/ou le dispositif de charge est/sont agencé(s) à une hauteur mesurée à partir du sol comprise entre 1 m et 1,5 m lorsque l'engin de construction routière se trouve sur le sol et le dispositif d'affichage (102) est agencé à une hauteur mesurée à partir du sol comprise entre 1,3 m et 1,9 m.

2. Engin de construction routière (100) selon la revendication 1, dans lequel les informations indicatives de l'état de charge de l'accumulateur (102) comprennent au moins une information parmi un niveau de remplissage absolu et/ou relatif de l'accumulateur (103), un contenu énergétique réel par rapport à un contenu énergétique maximal cible de l'accumulateur.

3. Engin de construction routière (100) selon l'une quelconque des revendications 1 à 2, dans lequel les informations indicatives du processus de charge de l'accumulateur (103) comprennent au moins une information parmi une information concernant le début du processus de charge, la fin complète du processus de charge, une erreur pendant le processus de charge.

4. Engin de construction routière (100) selon la revendication 3, dans lequel le dispositif d'affichage (102) est conçu pour fournir les informations indicatives du processus de charge de l'accumulateur (103) dans un format alphanumérique.

5. Engin de construction routière (100) selon l'une quelconque des revendications 1 à 4, dans lequel les informations indicatives du processus de charge de l'accumulateur (103) comprennent au moins une information parmi l'efficacité de charge, la température de batterie, la durée de charge prévue, le statut de batterie, l'état de connexion, le courant de charge.

6. Engin de construction routière (100) selon l'une quelconque des revendications 1 à 5, dans lequel l'engin de construction routière (100) comprend un dispositif d'entrée (223) permettant l'interaction d'un opérateur avec le dispositif d'affichage (102) et/ou permettant la sélection d'une fonction de l'engin de construction routière (100).

7. Engin de construction routière (100) selon la revendication 6, dans lequel ladite fonction comprend une commande temporelle du processus de charge et/ou un mode de charge et/ou un état de charge cible de l'accumulateur.

8. Engin de construction routière (100) selon la revendication 6 ou 7, dans lequel ladite fonction comprend un mode de fonctionnement d'au moins un composant de travail (105) de l'engin de construction routière (100) pendant le processus de charge.

9. Engin de construction routière (100) selon la revendication 8, comprenant en outre une unité de commande (180) permettant de commander le composant de travail (105) en fonction du mode de fonctionnement sélectionné.

10. Engin de construction routière (100) selon l'une quelconque des revendications 1 à 9, dans lequel l'engin de construction routière est un finisseur ou un alimentateur ou un train de chantier routier combiné finisseur-alimentateur.

11. Engin de construction routière (100) selon l'une quelconque des revendications 1 à 10, dans lequel l'engin de construction routière (100) comprend en outre un moteur à combustion interne (140).

12. Procédé de surveillance et/ou de commande d'un engin de construction routière (100), dans lequel l'engin de construction routière (100) comprend un entraînement électrique (104), un accumulateur (103) permettant d'alimenter l'entraînement électrique en courant électrique, un dispositif de charge (101) permettant de connecter l'accumulateur à une source de courant externe (130) et permettant de charger l'accumulateur (103), et dans lequel l'engin de construction routière (100) comprend en outre un dispositif d'affichage (102) permettant d'afficher des informations indicatives d'un état de charge de l'accumulateur et/ou d'un processus de charge de l'accumulateur, le procédé comprenant l'affichage des informations indicatives sur le dispositif d'affichage (102),
**caractérisé en ce que**
le dispositif d'affichage (102) est agencé au niveau de l'engin de construction routière (100) à une distance maximale d'au plus 1 m ou d'au plus 0,5 m par rapport à un raccordement du dispositif de charge (101) permettant de connecter l'accumulateur (103) à une source d'alimentation externe (130), dans lequel le raccordement et/ou le dispositif de charge est/sont agencé(s) à une hauteur mesurée à partir du sol comprise entre 1 m et 1,5 m lorsque l'engin de construction routière se trouve sur le sol et le dispositif d'affichage (102) est agencé à une hauteur mesurée à partir du sol comprise entre 1,3 m et 1,9 m.

13. Procédé selon la revendication 12, dans lequel l'engin de construction routière (100) est un engin de construction routière selon l'une quelconque des revendications 1 à 11.

14. Procédé selon la revendication 12 ou 13, dans lequel le procédé comprend une étape consistant à commander un composant de travail (105) de l'engin de construction routière (100) en fonction d'un mode de fonctionnement du composant de travail (105) sélectionné par l'intermédiaire du dispositif d'entrée (223) pendant le processus de charge.
